# EUROPÄISCHE PATENTSCHRIFT

(11) **EP 2 611 625 B1**
(45) Veröffentlichungstag und Bekanntmachung des Hinweises auf die Patenterteilung: **29.10.2014**
(21) Anmeldenummer: 10752762.4
(22) Anmeldetag: 02.09.2010
(51) Int. Cl.: B60B 21/00, B60B 27/00, F16D 55/22, F16D 65/12

(54) **RADBAUGRUPPE FÜR KRAFTFAHRZEUGE**
WHEEL ASSEMBLY FOR VEHICLES
ENSEMBLE ROUE POUR VEHICULES

(43) Veröffentlichungstag der Anmeldung: 10.07.2013
(73) Patentinhaber: Bayerische Motoren Werke Aktiengesellschaft, 80809 München (DE)
(72) Erfinder: SCHMIDT, Roland, 82131 Stockdorf (DE); BOEHM, Josef, 85356 Freising (DE); DUDKOWIAK, Johann, 82343 Pöcking (DE)
(74) Vertreter: Schmidt, Günter H. H.
(86) Internationale Anmeldenummer: PCT/EP2010/062903
(87) Internationale Veröffentlichungsnummer: WO 2012/028195

(56) Entgegenhaltungen:
- WO-A1-2005/123418
- WO-A1-2008/006339
- DE-A1- 3 636 243
- DE-A1- 3 931 868
- DE-A1-102004 045 327
- DE-B- 1 113 149
- US-A- 3 940 159
- US-A1- 2004 118 643

## Beschreibung

Die Erfindung betrifft eine Radbaugruppe für ein Kraftfahrzeug, nach dem Oberbegriff des ersten Anspruchs.

Der Aufbau eines konventionellen Rades und dessen Lagerung besteht aus den Bauteilen Radlager, Radnabe mit Radmontageflansch und Felge mit Reifen. Die Felge wird mit Radschrauben am Radmontageflansch befestigt, wobei die Bremsscheibe zwischen Felge und Radmontageflansch geklemmt wird. Eine solche Radlageranordnung beschreibt die DE 101 32 429 A1. Der maximale Bremsscheiben-Reibradius wird hier von der Maßkette, innerer Felgenradius - Höhe der Bremssattelbrücke - halbe Belaghöhe, bestimmt. Bei leistungsstarken Fahrzeugen ist es daher oft erforderlich eine größere Felge einzusetzen um die notwendige Bremsscheibengröße unterzubringen.

Bei der Dimensionierung der Bremsscheibe sollte ein möglichst großer Reibradius angestrebt werden, da dies die Zuspannkraft des Bremssattels und somit dessen Gewicht reduziert. Die Bremssattelbrücke kann kleiner dimensioniert werden und der Hydraulikkolben entsprechend kleiner sein. Mit dem Bremsscheibendurchmesser wächst allerdings im Gegenzug das Gewicht der Bremsscheibe.

Ein großer Reibradius lässt sich aber auch dadurch erreichen, dass der Bremssattel die Bremsscheibe von innen umfasst, also die Höhe der Bremssattelbrücke aus der Maßkette genommen wird. Dies bedingt, dass die Bremsscheibe an der Felge befestigt ist oder dass der Radmontageflansch bzw. die Radscheibe annähernd so groß wie der Felgen-Innendurchmesser ausgeführt sein muss und daran die innen umfasste Bremsscheibe befestigt wird.

Eine solche Ausführung beschreibt der nächstliegende Stand der Technik, die EP 018 37 48 A1, als Radbaugruppe mit Scheibenbremse für Fahrzeuge, bestehend aus einem topfförmigen Scheibenträger mit einem Basisteil, das an einer Radnabe befestigt ist, sowie einem Trommelteil, das sich in geringem radialem Abstand von einer Radfelge axial nach innen erstreckt und mit dem radial äußeren Rand einer Bremsscheibe fest verbunden ist. Ferner bestehend aus einem Bremssattel, der an einem feststehenden Radlagergehäuse abgestützt ist, den radial inneren Rand der Bremsscheibe umgreift, beiderseits der Bremsscheibe angeordnete Bremsbacken abstützt und mindestens auf einer Seite der Bremsscheibe eine Betätigungsvorrichtung aufweist. Radial innerhalb der Radfelge sind Lüftungskanäle vorhanden.

Eine innen umfasste felgenfeste Bremsscheibe wurde bisher auch bei Motorrädern bekannt. Hintergrund ist, dass hier, im Gegensatz zum Automobil, keine nennenswerten Seitenkräfte entstehen. Die Radlager sitzen direkt im Rad, dadurch kann die Bremsscheibenaufnahme in enger Toleranz zu den Lagersitzen gefertigt werden. Dagegen führen bei einseitigen Radführungen Fertigungstoleranzen und die Verformung der Felge unter Seitenkraft dazu, dass der Planlauf einer felgenfesten Bremsscheibe nicht gegeben ist. Die Bremsbeläge werden zurückgeschoben, so dass beim Betätigen der Bremse ein nicht akzeptabler Leerweg entsteht, bis die Bremsbeläge wieder anliegen. Zudem entstehen Lenkraddrehschwingungen, Der Seitenschlag wird dadurch beherrscht, dass Radnabenflansch und Bremsscheibe sehr exakt gefertigt werden. Es wirkt nur die Verformung zwischen Radträger und Radnabenflansch auf den Planlauf. Würde man eine innen umfasste Bremsscheibe an einer konventionellen Felge einer solchen einseitigen Radführung befestigen, würde allein der Verzug der Felge durch ungleichmäßiges Anziehen der Radschrauben die zulässigen Toleranzen überschreiten.

Der Radwechsel mit einer an der Felge befestigten Bremsscheibe ist deutlich erschwert, da die Scheibe bei der Demontage bzw. Montage aus dem Bremssattel ausgefädelt bzw. eingefädelt werden muss. Die Gefahr der Fehlbedienung bei der Montage oder zum Beispiel die des Betätigens der Bremse bei ausgebauter Bremsscheibe ist hoch.

Bei der US 2004/0118643 A1 dagegen, ist die Bremsscheibe an einem Felgenbund der Radfelge festgelegt und zusammen mit dem Rad und dem Bremssattel abnehmbar, was durch eine teilbare Achse ermöglicht wird, bei der die Antriebskraft über ein axial gerichtetes Keilwellenprofil übertragen wird. Eine solche Ausführung beansprucht sehr viel Bauraum und kommt, wie beschrieben, bei Nutzfahrzeugen zum Einsatz.

Um bei einer Radbaugruppe nach dem Stand der Technik im Zusammenbau den notwendigen Planlauf zu erreichen, wird der Radnabenflansch radaußenseitig gemeinsam mit dem Radlager radinnenseitig überdreht. Hier addieren sich dann die Bremsscheibentoleranzen mit denen der Felge und den Toleranzen die durch die Handhabung entstehen, zum Beispiel durch ungleichmäßiges Anziehen der Radschrauben.

Aufgabe der vorliegenden Erfindung ist es, eine Radbaugruppe für ein Kraftfahrzeug bereitzustellen, die oben genannte Nachteile vermeidet.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist eine Radbaugruppe die Merkmale des Anspruchs 1, umfasst.

Die elastisch nachgiebige Befestigung der Bremsscheibe an der Radscheibe kann zum Beispiel über einen in radialer Richtung elastisch nachgiebigen Haltering erreicht werden, der an der Radscheibe festgelegt ist. Ein solcher Bremsscheibenhalter kann aufgrund des niedrigen Kraftniveaus der weit außen angreifenden Bremskraft einfach elastisch gestaltet werden, was vorteilhafterweise der Bremsscheibe eine ungehinderte Ausdehnung erlaubt. Dadurch wird eine so genannte Schüsselung der Bremsscheibe vermieden und es werden örtliche axiale Verformungen der Radscheibe unter Seitenkraft nicht auf die Bremsscheibe übertragen.

Wenn das Rad so in zwei funktionale Einheiten getrennt wird, dass die Radschrauben die Radfelge mit der Radscheibe verbinden, verbleibt beim Demontieren des Rads ein im Durchmesser deutlich vergrößerter Radnabenflansch am Fahrzeug, der auch die innen umfasste Bremsscheibe trägt. Beim Reifenwechsel wird dann die Radfelge, als Reifenträger, von der Radscheibe abgeschraubt.

Die Bremsscheibe kommt ohne fest verbundenen Topf aus und kann somit vorteilhafterweise aus einer Platine gestanzt werden, was Gewichts- und Kostenvorteile bringt. Die aufgrund des größeren Reibradius geringere notwendige Zuspannkraft reduziert das Bremssattelgewicht, wogegen ein großer möglicher Bauraum für die Bremssattelbrücke hohe Steifigkeit bei vermindertem Gewicht erlaubt. Ein verbessertes Übersetzungsverhältnis ermöglicht außerdem einen kleineren Bremskraftverstärker.

Zusätzlich kann ein nicht angetriebenes Rad gezielt auf Seitenkraft ausgelegt werden, da keine Antriebs- und Bremsmomente über die Radscheibe geleitet werden, was ebenfalls Gewichtsvorteile mit sich dringt.

Vorteilhafte Ausführungsformen der Erfindung sehen vor, dass die axiale Vorspannung der Plan-Kerbverzahnung durch eine an der radäußeren Seite der Radnabe zugängliche, durch diese sich in axialer Richtung erstreckende Durchsteckschraube erzielt wird.

Für ein angetriebenes Rad kann dadurch die Radnabe bzw. bei Einstückigkeit von Radnabe und Radscheibe, letztere durch Lösen der Durchsteckschraube und der Radlagerschrauben leicht demontiert werden. Dies vereinfacht Wartungsarbeiten, zum Beispiel an der Bremse, erheblich.

Des Weiteren ist vorteilhaft, wenn die Radfelge aus einem Hohlkammer-Strangpressprofil besteht. Dabei kann sie und/oder die Radscheibe in einer besonders vorteilhaften Ausführung der Erfindung aus Aluminium oder Magnesium oder aus Kunststoff, insbesondere verstärkt durch Carbon- oder Glasfasern, bestehen. Radnabe und Radscheibe können dabei auch einstückig sein oder aus verschiedenen Werkstoffen zusammengesetzt sein. Durch den zumindest vorzugsweise einteiligen Aufbau von Radnabe und Radscheibe ergeben sich vielfältige Gestaltungsmöglichkeiten, was die Bauart und die Werkstoffe angeht, ohne die Einschränkungen, die eine Radverschraubung nach dem Stand der Technik mit sich bringt. Alle Kräfte und Momente müssen hier vom Radnabenflansch über die Verschraubung auf die Felge übertragen werden. Ein einteiliges Bauteil besitzt vorteilhafterweise eine größere Steifigkeit bei besserem Kraftschluss. Das Felgenbett kann aus gebogenem Strangpreßprofil hergestellt werden, wodurch sich auch eine höhere Steifigkeit des Felgenbetts gegenüber einer konventionellen Felge ergibt, weil sich der größte Anteil des Werkstoffs nahe der neutralen Faser befindet. Kostengünstige Zweitfelgen, zum Beispiel für Winterreifen, sind möglich oder bei Ersatz aufgrund von Beschädigungen, da nur das Felgenband getauscht werden muss.

Radeinheit und Bremssattel können so gestaltet werden, dass diese, im Gegensatz zu einem Rad oder einer Bremse nach dem Stand der Technik, leicht getauscht werden können. Somit kann eine Lösung nach der Erfindung beispielsweise nur für leistungsstarke Fahrzeuge eingesetzt werden, während leistungsschwächere Varianten parallel dazu mit einem Rad / Bremsensystem nach dem Stand der Technik bestückt werden können. Dies bietet sich insbesondere für teure Radausführungen an, wie zum Beispiel ausgeführt in Kohlefaser. Ebenso sind damit Nachrüstungen im Zubehör-Geschäft denkbar.

Eine besonders vorteilhafte Ausführungsform der Erfindung ist dadurch gekennzeichnet, dass das Radlager radinnenseitig über seinen Innenring mittels einer Überwurfmutter auf der Radnabe gesichert ist. Alternativ dazu kann das Radlager radinnenseitig auch über seinen Innenring mittels einer Vergrößerung des Außendurchmessers der Radnabe, insbesondere durch Bördelung, auf der Radnabe gesichert sein. Dabei kann die Vergrößerung des Außendurchmessers der Radnabe zur Sicherung des Radlagers im Rahmen der Herstellung der Plan-Kerbverzahnung an der Radnabe erreicht werden. Insbesondere kann dies mittels eines Spannmittels innerhalb eines Spannvorgangs für die Radnabe und insbesondere in einem Arbeitsgang erfolgen. Eine zumindest im Servicefall nicht lösbare Verbindung ist deshalb von Vorteil, weil die Aufnahme für die Bremsscheibe und die Aufnahme für das Felgenbett im Zusammenbau mit dem Radlager überdreht werden können und somit ein Höchstmass an Planlauf erreicht wird. Dies gilt insbesondere, wenn der Bremsscheibenhalter und die Radscheibe einteilig gestaltet sind. Des Weiteren ermöglicht der Entfall des konventionellen Radnabenflansches eine größere Radlagerbreite bei kleinerem Radlagerdurchmesser, was weniger Lager- und Dichtungsreibung ergibt oder eine größere Radscheibentiefe für hohe Steifigkeit erlaubt.

Im Folgenden wird die Erfindung anhand verschiedener Ausführungsbeispiele weiter erläutert. Erfindungswesentlich können sämtliche näher beschriebenen Merkmale sein. Es zeigen:
- Fig. 1:: eine erfindungsgemäße Radbaugruppe mit einer Radscheibe in Gussausführung,
- Fig. 2:: eine Radscheibe für eine erfindungsgemäße Radbaugruppe in Blechschalenausführung,
- Fig. 3:: eine Radscheibe für eine erfindungsgemäße Radbaugruppe mit gegossenen Speichen als nicht angetriebenes Rad,
- Fig. 4:: eine Radscheibe für eine erfindungsgemäße Radbaugruppe mit gegossenen Speichen als angetriebenes Rad, und
- Fig. 5:: eine Radscheibe für eine erfindungsgemäße Radbaugruppe mit Sandwichaufbau.

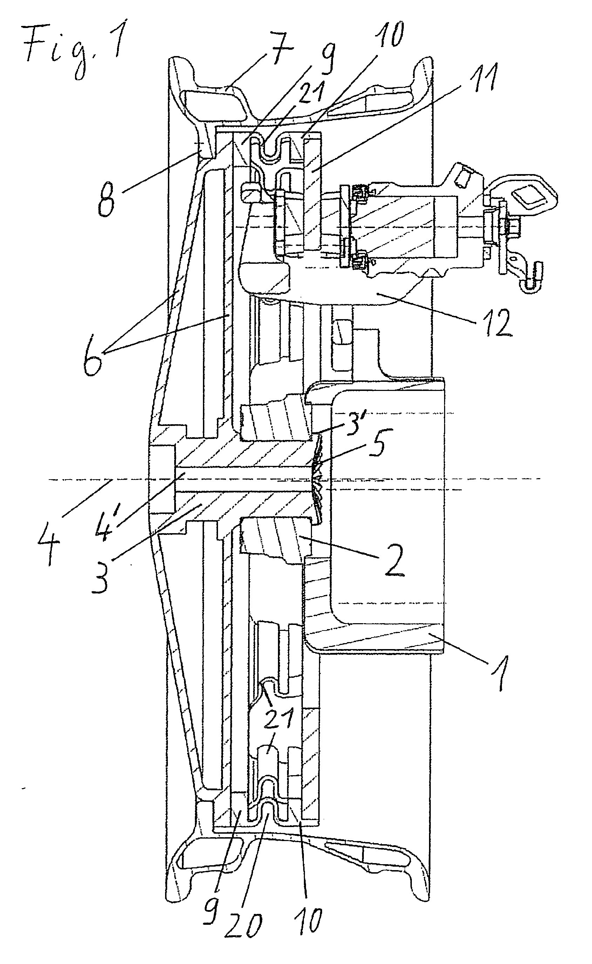

Die in Figur 1 dargestellte Radbaugruppe ist einem Radträger 1 zugeordnet, der einen Außenring eines nur angedeutet gezeichneten Radlagers 2 festlegt. Der Innenring des Radlagers 2 lagert eine Radnabe 3 drehantreibbar um eine gestrichelt gezeichnete Achse 4. Dabei ist das Radlager 2 radinnenseitig über seinen Innenring mittels eines durch Bördeln vergrößerten Außendurchmessers 3' der Radnabe 3 auf dieser gesichert, der im Rahmen der Herstellung einer Plan-Kerbverzahnung 5 zur Verbindung mit einer nicht gezeichneten Antriebswelle gefertigt wird. Dies erfolgt vorzugsweise innerhalb eines Spannvorgangs für die Radnabe 3, bevorzugt in einem Arbeitsgang.

Die Radnabe 3 ist auf der radinneren Seite des Radlagers 2 über die Plan-Kerbverzahnung 5, insbesondere ausgebildet als Voith-Hirth-Verzahnung, mit einem nicht gezeichneten Wellenzapfen der Antriebswelle verbunden. Die axiale Vorspannung der Plan-Kerbverzahnung 5 wird durch eine an der radäußeren Seite der Radnabe 3 zugängliche, durch diese sich in einer Bohrung 4' in axialer Richtung erstreckende, nicht gezeichnete Durchsteckschraube erzielt.

Eine doppelwandige Radscheibe 6, einstückig mit der Radnabe 3 aus Aluminium oder Magnesium ausgebildet, erstreckt sich auf der radäußeren Seite in radialer Richtung bis zu einer aus einem Hohlkammer-Strangpressprofil bestehenden Radfelge 7 mit einem nach innen ragenden Verschraubungsbund 8, der nicht gezeichnete Bohrungen besitzt, über die die Radfelge 7 mittels nicht gezeichneter Radschrauben durch korrespondierende nicht gezeichnete Bohrungen am Außenumfang der Radscheibe 6 mit einem Felgenträgerring 9 eines Bremsscheibenhalters 20 verbunden ist. Der Bremsscheibenhalter 20 ist in radialer Richtung elastisch nachgiebig ausgebildet und trägt an seiner nach innen gerichteten Bremsscheibenaufnahme 10 eine Bremsscheibe 11 einer Scheibenbremse, deren Bremssattel 12 die Bremsscheibe 11 über ihren Innenumfang umgreift und am Radträger 1 festgelegt ist. Die in radialer Richtung elastisch nachgiebige Ausbildung des Bremsscheibenhalters 20 ist verwirklicht durch in Umfangsrichtung beabstandete Verbindungselemente 21 zwischen Felgenträgerring 9 und Bremsscheibenaufnahme 10 des Bremsscheibenhalters 20 mit einem U-Schlag mit für die erforderliche Elastizität genügend geringer Wandstärke. Der Bremsscheibenhalter 20 besteht so aus Felgenträgerring 9, in radialer Richtung elastischen Verbindungselementen 21 und Bremsscheibenaufnahme 10.

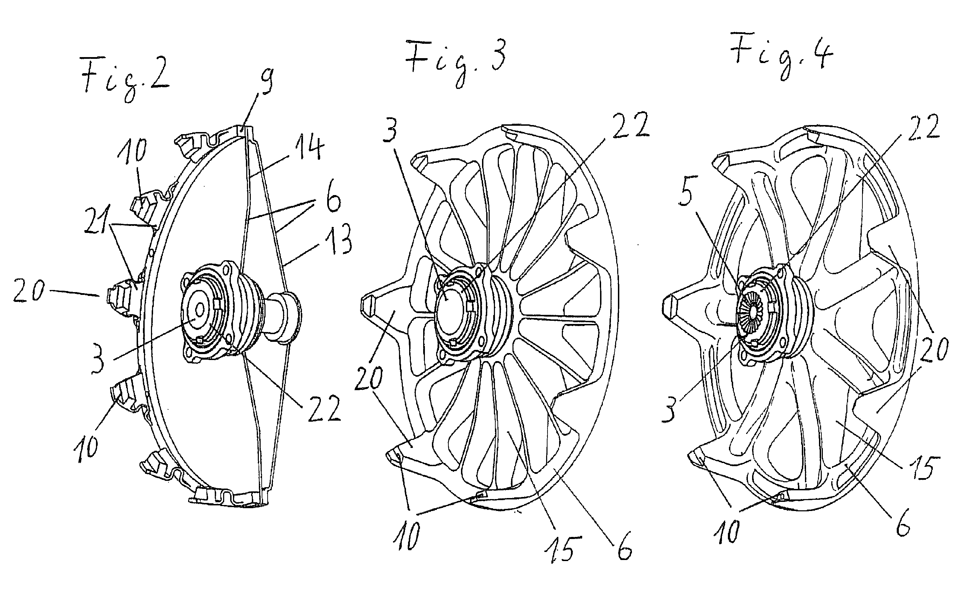

Die Figur 2 zeigt eine Ausführung der Erfindung entsprechend Figur 1, mit den Unterschieden, dass die Radscheibe 6 nicht in Gussausführung, sondern in Blechschalenausführung und somit nicht einstückig mit der Radnabe 3 ausgeführt, sondern gebaut ist. Eine radäußere 13 und eine radinnere 14 Blechschale ist an ihrem Außen- bzw. Innenumfang jeweils fest mit der Radfelge 7 und dem Felgenträgerring 9 bzw. der Radnabe 3 zur Drehmomentübertragung verbunden. Die Verbindung am Außenumfang mit der nicht gezeichneten Felge über den Felgenträgerring 9 mit dem Bremsscheibenhalter 20 entspricht der Verbindung, wie sie zu Figur 1 beschrieben ist. Zu Figur 1 unterschiedlich ist noch die Festlegung des eingebaut nicht sichtbaren Radlagers 2 mittels einer Überwurfmutter 22 auf der Radnabe 3.

Dieser Unterschied zu Figur 1 besteht auch in den Figuren 3 und 4. Diese zeigen außerdem zusätzlich zu den Figuren 1 und 2 jeweils eine Radscheibe 6 mit Radspeichen 15, verbunden mit einer angetriebenen bzw. mitlaufenden Radnabe 3. Die angetriebene Radnabe 3 besitzt die Plan-Kerbverzahnung 5. Der Werkstoff für die Radscheiben 6, die gegossen oder auch in Formen gesprizt sein können, kann sowohl Leichtmetall als auch Kunststoff, insbesondere faserverstärkt, sein. Der Bremsscheibenhalter 20 mit der Bremsscheibenaufnahme 10 ist hier einstückig mit der Radscheibe 6 ausgeführt. Die Bremsscheibe könnte aber auch entsprechend Figur 1 über einen Felgenträgerring 9 mit Bremsscheibenhalter 20 befestigt werden. Bei der einstückigen Ausführung mit der Radscheibe 6 wird die genügende Elastizität in radialer Richtung über die je nach Werkstoff unterschiedliche Wahl der Wandstärke der Bremsscheibenhalter 20 erreicht. Hier dargestellt sind Radscheiben 6 aus Kunststoff.

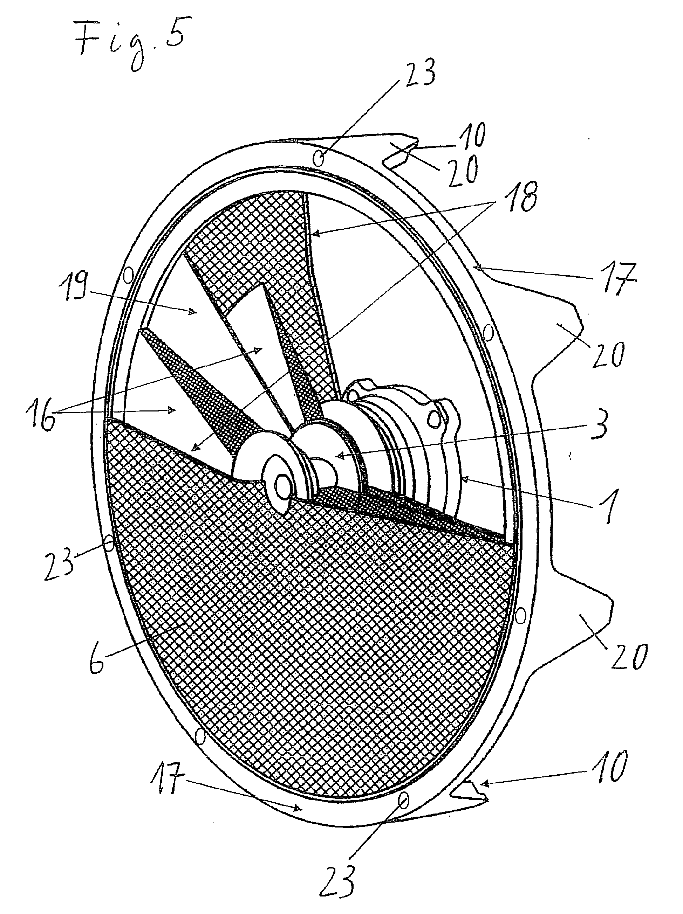

Die Figur 5 zeigt dagegen eine Ausführung der Erfindung in Kunststoff-Metallbauweise mit einer Bremsscheibenaufnahme 10 entsprechend den Figuren 3 und 4, mit dem Unterschied dazu, dass die Radscheibe 6 aus Kohlefaserlagen in Sandwichbauweise aufgebaut ist. Die Radnabe 3 und ein Trägerring 17 für Radfelge 7 und Bremsscheibe 11 (beide in dieser Figur nicht gezeichnet) sind einlaminiert in die Radscheibe 6 über deren Kunststoffschalen 18 verstärkt durch Carbonfasern und/oder-gewebe. Zwischen den Kunststoffschalen 18 befindet sich sogenanntes Sandwich-Füllmaterial 16, zum Beispiel aus geschäumtem Kunststoff, und eine duktile Stahlblecheinlage 19. Der Trägerring 17 kann dabei zumindest radinnenseitig, hin zur Bremsscheibenaufnahme 10, alternativ auch entsprechend dem Felgenträgerring 9 mit elastischen Verbindungselementen 21 aus Figur 1 aufgebaut sein. Ansonsten sind hier die sonst nirgendwo gezeichneten Bohrungen 23 für die nicht gezeichneten Radschrauben sichtbar, mit denen die Radfelge 7 (Figur 1) über ihren nach innen ragenden Verschraubungsbund 8 am Außenumfang der Radscheibe 6 mit dem Trägerring 17 des Bremsscheibenhalters 20 verbunden ist.

## Patentansprüche

1. Radbaugruppe zur einseitigen Aufhängung eines Kraftfahrzeugrades, mit einer, in radialer Richtung gesehen, an ihrem Außenumfang nahe einer Radfelge (7) an einer Radscheibe (6) festgelegten Bremsscheibe (11) einer Scheibenbremse, deren Bremssattel (12) die Bremsscheibe (11) über ihren Innenumfang umgreift und an einem Radträger (1) festgelegt ist, der einen stehenden Ring eines Radlagers (2) abstützt, dessen rotierender Ring eine Radnabe (3) trägt, die wiederum mit der Radscheibe (6) verbunden ist, **dadurch gekennzeichnet, dass** die Radnabe (3) auf der radinneren Seite des Radlager (2) mit einer Antriebswelle über eine Plan-Kerbverzahnung (5), insbesondere eine Voith-Hirth-Verzahnung, verbunden ist und dass die Bremsscheibe (11) über einen in radialer Richtung elastisch nachgiebigen Bremsscheibenhalter (20), schwimmend und/oder in radialer Richtung elastisch nachgiebig, an der Radscheibe (6) befestigt ist.

2. Radbaugruppe nach Anspruch 1, **dadurch gekennzeichnet, dass** die axiale Vorspannung der Plan-Kerbverzahnung (5) durch eine an der radäußeren Seite der Radnabe (3) zugängliche, durch diese sich in axialer Richtung erstreckende Durchsteckschraube erzielt wird.

3. Radbaugruppe nach einem der Ansprüche 1 oder 2, **dadurch gekennzeichnet, dass** die Radfelge (7) aus einem Hohlkammer-Strangpressprofil besteht.

4. Radbaugruppe nach einem der Ansprüche 1 bis 3, **dadurch gekennzeichnet, dass** die Radnabe (3) und die Radscheibe (6) einstückig sind.

5. Radbaugruppe nach einem der Ansprüche 1 bis 4, **dadurch gekennzeichnet, dass** die Radfelge (7) und/oder die Radscheibe (6) aus Aluminium oder Magnesium oder aus Kunststoff; insbesondere verstärkt durch Carbon- oder Glasfasern, besteht.

6. Radbaugruppe nach einem der Ansprüche 1 bis 5, **dadurch gekennzeichnet, dass** das Radlagers (2) radinnenseitig über seinen Innenring mittels einer Überwurfmutter (22) auf der Radnabe (3) gesichert ist.

7. Radbaugruppe nach einem der Ansprüche 1 bis 5, **dadurch gekennzeichnet, dass** das Radlager (2) radinnenseitig über seinen Innenring mittels einer Vergrößerung des Außendurchmessers (3') der Radnabe (3), insbesondere durch Bördelung, auf der Radnabe (3) gesichert ist.

8. Radbaugruppe nach Anspruch 7, **dadurch gekennzeichnet, dass** die Vergrößerung des Außendurchmessers (3') der Radnabe (3) zur Sicherung des Radlagers (2) im Rahmen der Herstellung der Plan-Kerbverzahnung (5) an der Radnabe (3) erreicht wird.

9. Radbaugruppe nach Anspruch 8, **dadurch gekennzeichnet, dass** die Vergrößerung des Außendurchmessers (3') zur Sicherung des Radlagers (2) und die Herstellung der Plan-Kerbverzahnung (5) an der Radnabe (3) mittels eines Spannmittels innerhalb eines Spannvorgangs für die Radnabe (3), insbesondere in einem Arbeitsgang, erfolgt.

## Claims

1. A wheel assembly for mounting a motor vehicle wheel on one side, with a brake disc (11) of a disc brake, which is fixed at its outer periphery, viewed in the radial direction, close to a wheel rim (7) on a wheel disc (6), the brake calliper (12) of said disc brake encompassing the brake disc (11) over its inner periphery and being fixed on a wheel carrier (1), which supports a stationary ring of a wheel bearing (2), the rotating ring of which carries a wheel hub (3), which is in turn connected to the wheel disc (6), **characterised in that** the wheel hub (3) is connected on the side of the wheel bearing (2) on the inner side of the wheel to a drive shaft by means of a spur toothing (5), more especially a Voith Hirth toothing, and **in that** the brake disc (11) is fastened in a floating and/or elastically flexible manner in the radial direction to the wheel disc (6) by means of a brake disc holder (20) that is elastically flexible in the radial direction.

2. A wheel assembly according to claim 1, **characterised in that** the axial prestressing of the spur toothing (5) is achieved by a push-through screw, which is accessible at the side of the wheel hub (3) on the outer side of the wheel and extends through the latter in the axial direction.

3. A wheel assembly according to either of claims 1 or 2, **characterised in that** the wheel rim (7) consists of an extruded hollow chamber profile.

4. A wheel assembly according to any one of claims 1 to 3, **characterised in that** the wheel hub (3) and the wheel disc (6) are in one piece.

5. A wheel assembly according to any one of claims 1 to 4, **characterised in that** the wheel rim (7) and/or the wheel disc (6) comprises aluminium or magnesium or a plastics material, more especially reinforced by carbon fibres or glass fibres.

6. A wheel assembly according to any one of claims 1 to 5, **characterised in that** the wheel bearing (2) is secured on the inner side of the wheel over its inner ring by means of a cap nut (22) on the wheel hub (3).

7. A wheel assembly according to any one of claims 1 to 5, **characterised in that** the wheel bearing (2) is secured on the inner side of the wheel over its inner ring by means of an enlargement of the external diameter (3') of the wheel hub (3), more especially by beading, on the wheel hub (3).

8. A wheel assembly according to claim 7, **characterised in that** the enlargement of the external diameter (3') of the wheel hub (3) to secure the wheel bearing (2) is achieved during the production of the spur toothing (5) on the wheel hub (3).

9. A wheel assembly according to claim 8, **characterised in that** the enlargement of the external diameter (3') to secure the wheel bearing (2) and the production of the spur toothing (5) on the wheel hub (3) take place by a clamping means within a clamping process for the wheel hub (3), more especially in one working step.

## Revendications

1. Ensemble de roue pour permettre la suspension unilatérale d'une roue de véhicule comportant un disque de frein (11) d'un frein à disque fixé, sur un disque de roue (6) à proximité d'une jante de roue (7) sur sa périphérie externe, en direction radiale et dont l'étrier de frein (12) entoure le disque de frein (11) sur sa périphérie interne et est fixé à un support de roue (1) qui supporte une bague fixe d'un palier de roue (2) dont la bague rotative porte un moyeu de roue (3) qui est relié au disque de roue (6),
**caractérisé en ce que**
le moyeu de roue (3) est relié sur la face externe de la roue du palier de roue (2) à un arbre d'entrainement par l'intermédiaire d'une denture cannelée plane (5) en particulier d'une denture de Voith-Hirth, et le disque de frein (11) est fixé sur le disque de roue (6) de manière flottante et/ou flexible élastiquement en direction radiale par l'intermédiaire d'un organe de maintien (20) du disque de frein élastiquement déformable en direction radiale.

2. Ensemble de roue conforme à la revendication 1,
**caractérisé en ce que**
la précontrainte axiale de la denture cannelée plane (5) est obtenue par l'intermédiaire d'une vis traversante accessible sur la face externe à la roue du moyeu de roue (3) et s'étendant au travers de celui-ci en direction axiale.

3. Ensemble de roue conforme à l'une des revendications 1 et 2,
**caractérisé en ce que**
la jante de roue (7) est constituée par un profilé extrudé à chambre creuse.

4. Ensemble de roue conforme à l'une des revendications 1 à 3,
**caractérisé en ce que**
le moyeu de roue (3) et le disque de roue (6) sont réalisés en une seule pièce.

5. Ensemble de roue conforme à l'une des revendications 1 à 4,
**caractérisé en ce que**
la jante de roue (7) et/ou le disque de roue (6) sont réalisés en aluminium ou en magnésium ou en un matériau synthétique, en particulier renforcé par des fibres de carbone ou des fibres de verre.

6. Ensemble de roue conforme à l'une des revendications 1 à 5,
**caractérisé en ce que**
le palier de roue (2) est bloqué sur le moyeu de roue (3) du côté intérieur de la roue sur sa bague interne, au moyen d'un écrou d'accouplement (22).

7. Ensemble de roue conforme à l'une des revendications 1 à 5,
**caractérisé en ce que**
le palier de roue (2) est bloqué sur le moyeu de roue (3) du côté intérieur de la roue sur sa bague interne par une augmentation du diamètre externe (3') du moyeu de roue (3), en particulier par une collerette.

8. Ensemble de roue conforme à la revendication 7,
**caractérisé en ce que**
l'augmentation du diamètre externe (3') du moyeu de roue (3) permettant de bloquer le palier de roue (2) est obtenu dans le cadre de la fabrication de la denture cannelée plane (5) sur le moyeu de roue (3).

9. Ensemble de roue conforme à la revendication 8,
**caractérisé en ce que**
l'augmentation du diamètre externe (3') permettant de bloquer le palier de roue (2) et la fabrication de la denture cannelée plane (5) sur le moyeu de roue (3) s'effectuent par un moyen de serrage hors d'un processus de serrage du moyeu de roue (3) en particulier dans une étape d'usinage.
